# EUROPÄISCHE PATENTSCHRIFT

(11) **EP 1 788 028 B1**
(45) Veröffentlichungstag und Bekanntmachung des Hinweises auf die Patenterteilung: **27.02.2008**
(21) Anmeldenummer: 06023732.8
(22) Anmeldetag: 15.11.2006
(51) Int. Cl.: C08L 77/06, C08L 77/10, C08K 7/06, C08K 7/14

(54) **Verstärkte Polyamidformmassen**
Reinforced polyamide moulding compositions
Compositions de moulage renforcées à base de polyamide

(30) Priorität: 18.11.2005 EP 05025216
(43) Veröffentlichungstag der Anmeldung: 23.05.2007
(73) Patentinhaber: EMS-Chemie AG, 7013 Domat/Ems (CH)
(72) Erfinder: Rexin, Ornulf, 7013 Domat/Ems (CH); Linster, Jean-Jacques, 7000 Chur (CH); Hewel, Manfred, 7013 Domat/Ems (CH)
(74) Vertreter: Becker Kurig Straus

(56) Entgegenhaltungen:
- EP-A- 0 957 131
- EP-A1- 0 544 049
- EP-A1- 0 672 723
- WO-A-02/40591
- DE-A1- 4 321 247

## Beschreibung

Die vorliegende Erfindung betrifft ein Verfahren zur Herstellung von verstärkten Polyamidformmassen, die aus einem Polyamidblend durch Pultrusionsverfahren herstellbar sind und mechanische Eigenschaften aufweisen, welche normalerweise nicht miteinander vereinbar sind, nämlich eine außergewöhnliche Kombination von hoher Steifigkeit und Festigkeit bei gleichzeitig guter Zähigkeit. Weiterhin wird erfindungsgemäß mit den hergestellten Polyamidformmassen eine hohe Wärmeformbeständigkeit (HDT) erzielt.

Die erfindungsgemäß erzeugten, thermoplastischen Polyamidformmassen eignen sich zur Herstellung von Formkörpem oder anderen Halbzeugen oder Fertigteilen, die z. B. durch Extrusion, Spritzguss, Pressen, Direktverfahren bzw. Direktcompounding, bei dem die compoundierte Polyamidformmasse direkt durch Spritzguss verarbeitet wird oder anderen Verformungstechniken herstellbar sind.

Verstärkte Polyamidblends spielen eine zunehmende Rolle im Bereich der technischen Konstruktionswerkstoffe, da sie neben hoher Steifigkeit, eine gute Zähigkeit und Wärmeformbeständigkeit zeigen. Einsatzgebiete sind, z. B. Innen- und Außenteile im Automobilsektor und im Bereich von anderen Transportmitteln, Gehäusematerial für Geräte und Apparate für die Telekommunikation, Unterhaltungselektronik, Haushaltsapparate, Maschinenbau, Heizungsbereich und Befestigungsteile für Installationen.

Der besondere Vorteil von verstärkten Polyamiden liegt im außergewöhnlich guten Verbund zwischen Polymermatrix und Verstärkungsstoffen. Dies gilt auch bei hohen Verstärkungsgraden, die zu hochsteifen Produkten führen. Die Zähigkeit dieser Produkte genügt allerdings nicht allen Anforderungen.

Im folgenden sollen unter Polyamiden solche Polymere verstanden werden, die sich von Dicarbonsäuren, Diaminen, Aminocarbonsäuren und/oder Lactamen herleiten. Es kann sich dabei um Homo- oder Copolyamide handeln. Das Zahlenmittel des Molekulargewichts der Polyamide sollte über 5000, vorzugsweise über 10.000 liegen.

JP 07-097514 (Asahi) beschreibt Polyamidharzzusammensetzungen als Isolationsmaterial für elektrische Schiebeschalter. Das dabei angestrebte Eigenschaftsprofil umfasst folgende Eigenschaften: Dimensionsstabilität, HDT, Kriechstromfestigkeit, Lichtbogenfestigkeit, Oberflächenrauhigkeit, Oberflächenglanz, Ablagerungen im Werkzeug bei der Formgebung, Gleiteigenschaften, Fliessfähigkeit. Besonderer Wert wird dabei auf die elektrischen Eigenschaften, die Oberflächenqualität und die Gleiteigenschaften gelegt. Das als Matrix verwendete Polyamid-Blend (40 bis 70 Gew.-%) setzt sich aus (a1) einem Copolyamid aus 55 bis 95 Gew.-% 66- und 5 bis 45 Gew.-% 6I- und/oder 6-Einheiten und (a2) 0 bis 50 Gew.-% eines aliphatischen Polyamids (PA), ausgewählt aus PA 6, PA 66, PA 11, PA 12, PA 610, PA 612, PA 46 sowie als Füllstoff (30 bis 60 Gew.-%) eine Mischung aus Fasern und Mineralien (Gewichtsverhältnis 1,0 oder tiefer), ausgewählt aus Glasfasern, Carbon- bzw. Kohlenstofffasern, Glimmer, Talkum, Kaolin, Wollastonit, Calciumcarbonat, Magnesiumoxid oder Kaliumtitanat. In den Beispielen werden als Komponente (a1) Copolyamid 66/6I oder Copolyamid 66/6 und als Komponente (a2) PA 66, PA66/6, PA612 oder PA6 verwendet. Die in den Beispielen erzielten Reissfestigkeiten liegen zwischen 1070 kg/cm² und 1800 kg/cm², umgerechnet also zwischen 105 MPa und 176 MPa. Die erzielten HDT A Werte liegen zwischen 210°C und 241 °C.

JP 03-269056 (Mitsubishi) beschreibt ganz allgemein in den Patentansprüchen Polyamidformmassen aus (A) Polyamid 6 oder Polyamid 66 in Kombination mit einem Copolyamid aus (Ba) aliphatischem Diamin, Isophthalsäure und Terephthalsäure (60 bis 100% (Ba)) und (Bb) Lactam und/oder aliphatischem Diamin und aliphatischer Dicarbonsäure (0 bis 40% (Bb)), Füllstoff (C) und als Komponente (D) gesättigte aliphatische Carbonsäuren und/oder ein Metallsalz davon. Für die Mengenverhältnisse gelten gemäß JP 03-269056 die Bedingungen (A) + (B) = 40 bis 95%, (C) = 3 bis 60%, (D) = 0,005 bis 1% und ein Verhältnis von (B)/(A) von 0,01 bis 0,025, wobei (B) = (Ba) + (Bb). Allerdings werden gemäß den in den Beispielen der JP 03-269056 gearbeiteten praxisnahen Rezepturen als aliphatisches Polyamid entweder Polyamid 66 oder Polyamid 6 eingesetzt, während als semi-aromatisches Polyamid ein Polyamid 6I/6T (Gewichtsverhältnis 66,7/33,3) bzw. ein Polyamid 6I/6T/6 (Gewichtsverhältnis 62,6/31,3/6,1) verwendet wird. Als Füllstoff wird ausschließlich Glasfaser, gegebenenfalls in Kombination mit Wollastonit eingesetzt, wobei der Höchstgehalt an Füllstoff 40 Gew.-% ist (vgl. Beispiele 2 und 3). Gemäß der JP 03-269056 sollen Formmassen bereitgestellt werden, die ein hervorragendes thermisches und mechanisches Verhalten haben und auch gute Oberflächeneigenschaften zeigen, d. h. keine Verformung oder Einsackstellen in den Formkörpern ergeben. Mit der Verwendung von 6I/6T wird gemäß der JP 03-269056 (vgl. Beispiel 2) allerdings nur ein HDT/A von 241°C sowie ein HDT/C von 150°C erzielt (Nachstellung durch den Erfinder siehe Vergleichsbeispiel 11). Es ergeben sich außerdem Reissfestigkeiten von umgerechnet 182 bzw. 185 MPa (vgl. Beispiele 2 und 3).

EP-A-672 723 beschreibt eine langfaserverstärkte Polyamidharzzusammensetzung.

DE-A-4 321 247 beschreibt eine Polyamidharzmasse, die 5 bis 70 Gew.-% eines anorganischen Füllstoffs enthält, der unter Glasfasern und Kohlenstofffasern ausgewählt sein kann.

Aufgabe der vorliegenden Erfindung ist es daher, ein Verfahren zur Herstellung von weiteren hochsteifen und gleichzeitig zähen, verstärkten Polyamidformmassen mit hohen Wärmeformbeständigkeiten (HDT) bereitzustellen, so dass für einen bestimmten Füllstoffgehalt mechanische Eigenschaften resultieren, die normalerweise nicht miteinander vereinbar sind.

Diese Aufgabe wird durch das Verfahren gemäß Anspruch 1 gelöst, wobei zur Herstellung der Polyamidformmassen ein Polyamidblend verwendet wird, welches eine Polymermatrix aus einem Blend aus Polyamid 66 (Homopolyamid) und einem Copolyamid (CoPA) 6T/6I (B) sowie als Verstärkungsmaterial eine Mischung aus Glasfasern und Carbon- bzw. Kohlenstofffasern aufweist. Um eine weitere Erhöhung der Steifigkeit zu erhalten kann ein Teil der Glasfasern durch Carbonfasern ersetzt werden, so dass ein Hybrid-faserverstärkter Compound zum Einsatz kommt.

Die verwendeten Fasern können in einer vorteilhaften Ausführungsform der Erfindung auch beschichtet sein.

Die Aufgabe wird weiterhin durch das langfaserverstärkte Stäbchengranulat gemäß Anspruch 15, die Verwendung wird gemäß Anspruch 16, die Herstellung der Formkörper gemäß Anspruch 17, sowie durch die Formkörper gemäß Anspruch 18 gelöst.

In den Unteransprüchen sind vorteilhafte, aber nicht ausschließliche Ausführungsformen der Erfindung enthalten.

Die erfindungsgemäß herstellbaren Polyamidformmassen sind daher hochsteife und gleichzeitig zähe, verstärkte Polyamidformmassen mit hoher Wärmeformbeständigkeit (HDT), als Polyamidmatrix enthaltend ein Blend aus den folgenden Komponenten:
(A) Polyamid 66,
(B) Copolyamid, aufgebaut aus
   (b₁) 50 bis 80 Gew.-Teile Einheiten, insbesondere 50 bis 70 Gew.-Teile Einheiten, welche sich von Terephthalsäure (T) in Kombination mit Hexamethylendiamin (6) in nahezu äquimolarem Verhältnis ableiten,
   (b₂) 50 bis 20 Gew.-Teile Einheiten, insbesondere 50 bis 30 Gew.-Teile Einheiten, welche sich von Isophthalsäure (I) in Kombination mit Hexamethylendiamin in nahezu äquimolarem Verhältnis ableiten,
      wobei die Gewichtsteile der Komponenten (b₁) und (b₂) zusammen 100 Gew.-Teile ergeben,
   und als Füllstoffkomponente enthaltend eine Mischung aus:
(C) Glasfasern und
(D) Carbon- bzw. Kohlenstofffasern,
wobei die Gewichtsprozente der Komponenten (A) bis (D) zusammen 100% ergeben und
wobei die Komponenten (A), (B), (C) und (D) die folgenden Bedingungen erfüllen:

| | |
|---|---|
| (A) + (B): | 20 bis 60 Gew.-%, , insbesondere 20 bis 39 Gew.-%, |
| Gewichtsverhältnis (A)/(B): | 50/50 bis 95/5, |
| (C) + (D): | 40 bis 80 Gew.-%, |
| Gewichtsverhältnis (C)/(D): | 80/20 bis 95/5, |

wobei die Polyamidformmassen gegebenenfalls zusätzlich zu den Komponenten (A) bis (D) Zusatzstoffe (E) enthalten, und wobei deren Menge additiv zur Summe der Komponenten (A) bis (D) ist.

In besonderen Ausführungsformen der Erfindung beträgt die Menge an Füllstoff, d.h. an Glasfasern und Carbon- bzw. Kohlenstofffasern, 61 bis 75 Gew.-%, besonders bevorzugt 64 bis 75 Gew.-%, ganz besonders bevorzugt 66 bis 75 Gew.-%.

Die erfindungsgemäß erzielten mechanischen und thermischen Eigenschaften der verstärkten Formmassen umfassen Reissfestigkeiten von über 230 MPa (gemessen an Norm-Prüfkörpern gemäß ISO 527), Reissdehnungen von über 1,4% (gemessen an Norm-Prüfkörpern gemäß ISO 527), Wärmeformbeständigkeitswerte HDT/A (1,8 MPa) (gemessen nach ISO 75) von über 242°C, bevorzugt von mindestens 245°C, HDT/C (8 MPa) (gemessen nach ISO 75) von über 150°C, bevorzugt von über 170°C.

Als Copolyamid wird erfindungsgemäß ein Copolyamid 6T/61 (Komponente (B)) eingesetzt. Von besonderer Bedeutung ist dabei das Verhältnis von Polyamid 6T/6I zum Anteil Polyamid 66.

In einer besonderen Ausführungsform der Erfindung weisen die Polyamidformmassen Reissfestigkeiten von über 230 MPa und gegebenenfalls Kerbschlagzähigkeiten von mindestens 25 kJ/m² auf.

In einer anderen bevorzugten Ausführungsform der Erfindung weisen die Polyamidformassen Reissfestigkeiten von mindestens 250 MPa und gegebenenfalls Kerbschlagzähigkeiten von mindestens 25 kJ/m² auf.

In einer noch anderen Ausführungsform der Erfindung weisen die Polyamidformmassen einen Gesamtfasergehalt von 66 bis 74 Gew.-%, einen Zug-E-Modul von über 25500 MPa, bevorzugt von über 27000 MPa, besonders bevorzugt von über 28000 MPa und gegebenenfalls eine Kerbschlagzähigkeit von mindestens 30 kJ/m² auf.

Erfindungsgemäß können die Polyamidformmassen einen Gesamtfasergehalt von 66 bis 74 Gew.-% und eine Kerbschlagzähigkeit von mindestens 40 kJ/m², bevorzugt mindestens 45 kJ/m² aufweisen.

In noch einer anderen Ausführungsform der Erfindung weisen die Polyamidformmassen einen Gesamtfasergehalt von 46 bis 54 Gew.-%, einen Zug-E-Modul von über 18000 MPa, bevorzugt von über 19000 MPa, besonders bevorzugt von über 20000 MPa und gegebenenfalls eine Kerbschlagzähigkeit von mindestens 25 kJ/m² auf.

In einer weiteren besonderen Ausführungsform der Erfindung weisen die Polyamidformmassen einen Gesamtfasergehalt von 46 bis 54 Gew.-% und eine Kerbschlagzähigkeit von mindestens 30 kJ/m² , bevorzugt mindestens 35 kJ/m² auf.

In einer noch anderen Ausführungsform der Erfindung weisen die Polyamidformmassen einen Gesamtfasergehalt von 55 bis 65 Gew.-%, einen Zug-E-Modul von über 20000MPa, bevorzugt von über 25000 MPa, besonders bevorzugt von über 30000 MPa und gegebenenfalls eine Kerbschlagzähigkeit von mindestens 35 kJ/m², bevorzugt mindestens 40 kJ/m² auf.

Durch Einstellung des Verhältnisses 6T > 6I kann der Schmelzpunkt und der HDT angehoben werden. Das Copolyamid 6T/6I weist eine relative Viskosität (RV) gemessen in 0,5%iger m-Kresol-Lösung von zwischen 1,4 und 1,8, bevorzugt von zwischen 1,48 und 1,7 auf.

Die erfindungsgemäß als Roving (Füllstoffkomponente (C)) eingesetzten Glasfasern weisen einen Durchmesser von 10 bis 20 µm, bevorzugt von 12 bis 18 µm auf, wobei der Querschnitt der Glasfasern rund, oval oder eckig ist. Insbesondere werden erfindungsgemäß E-Glasfasern verwendet. Es können aber auch alle anderen Glasfasersorten, wie z.B. A-, C-, D-, M-, S-, R-Glasfasern oder beliebige Mischungen davon oder Mischungen mit E-Glasfasern eingesetzt werden.

Die erfindungsgemäßen Formmassen können aber auch weitere Zusatzstoffe (E), wie z. B. aus der Gruppe der anorganischen Stabilisatoren, organischen Stabilisatoren, Gleitmittel, Farbstoffe, metallischen Pigmente, Metallflitter, metallbeschichtete Partikel, halogenhaltigen Flammschutzmittel, halogenfreien Flammschutzmittel, Schlagzähmodifikatoren, Antistatika, Leitfähigkeitsadditive, Entformungsmittel, optischen Aufheller, natürlichen Schichtsilikate, synthetischen Schichtsilikate oder Gemische der genannten Zusatzstoffe enthalten.

Als Antistatika können in den erfindungsgemäßen Formmassen z. B. Ruß und/oder Kohlenstoffnanoröhrchen eingesetzt werden.

Die Verwendung von Russ zusätzlich zu den vorhandenen Carbonfasern kann aber auch der Verbesserung der Schwarzfärbung der Formmasse dienen.

Als Schichtsilikate können in den erfindungsgemäßen Formmassen, z.B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt, aber auch unbehandelt sein.

Als Stabilisatoren bzw. Alterungsschutzmittel können in den erfindungsgemäßen Formmassen, z.B. Antioxidantien, Antiozonantien, Lichtschutzmittel, UV-Stabilisatoren, UV-Absorber oder UV-Blocker eingesetzt werden.

Bei der vorliegenden Erfindung handelt es sich somit um ein langfaserverstärktes Stäbchengranulat mit mechanischen Eigenschaften, welche normalerweise nicht miteinander vereinbar sind Stäbchengranulat, nämlich einer Kombination aus außergewöhnlich hoher Steifigkeit und hohem HDT bei gleichzeitig guter Zähigkeit. Überraschenderweise hat sich gezeigt, dass dies durch die Kombination zweier Maßnahmen erreicht werden kann: die Zugabe eines teilaromatischen Copolyamides 6T/6I und die Verwendung von Carbon- bzw. Kohlenstofffasern zusätzlich zu Glasfasern. Es kommt also ein hybridfaserverstärkter Compound zum Einsatz, wobei sich ein Gehalt von 15 bis 30 Gew.-% PA 66, 4 bis 17 Gew.-% CoPA 6T/6I, 61 bis 65 Gew.-% Glasfaser und 5 bis 9 Gew.-% Carbonfaser als besonders bevorzugte Zusammensetzung sowohl bezüglich mechanischer Eigenschaften als auch Wirtschaftlichkeit für die erfindungsgemäße Formmasse ergeben hat. Die Gewichtsprozente addieren sich dabei zu 100%. Die Menge etwaiger Zusatzstoffe ist additiv zu diesen 100 %.

In einer Ausführungsform der Erfindung bei einem Gesamtfasergehalt von 66 bis 74 Gew.-% zeigen die Formmassen einen Zug-E-Modul von über 25500 MPa, bevorzugt von über 27000 MPa, besonders bevorzugt von über 28000 MPa und insbesondere eine Reissdehnung von mindestens 1,5%.

Die Reissdehnung der erfindungsgemäßen Formmassen mit einem Gesamtfasergehalt von 66 bis 74 Gew.-% kann bevorzugt mindestens 1,6%, besonders bevorzugt mindestens 1,7% betragen.

Insbesondere beträgt die Schlagzähigkeit (Charpy New, 23 °C) der erfindungsgemäßen Formmassen mit einem Gesamtfasergehalt von 66 bis 74 Gew.-% mindestens 50 kJ/m², bevorzugt mindestens 60 kJ/m², besonders bevorzugt mindestens 70 kJ/m².

In einer anderen Ausführungsform der Erfindung weisen die erfindungsgemäßen Formmassen mit einem Füllstoffgehalt (Gesamtfasergehalt) von 46 bis 54 Gew.-% einen Zug-E-Modul von über 18000 MPa, bevorzugt von über 19000 MPa, besonders bevorzugt von über 20000 MPa und insbesondere eine Reissdehnung von mindestens 1,8% auf.

Besonders bevorzugt beträgt die Reissdehnung der erfindungsgemäßen Formmassen mit einem Gesamtfasergehalt von 46 bis 54 Gew.-% mindestens 2,0%, ganz besonders bevorzugt mindestens 2,3%.

Die Schlagzähigkeit (Charpy New, 23 °C) der erfindungsgemäßen Formmassen mit einem Gesamtfasergehalt von 46 bis 54 Gew.-% beträgt insbesondere mindestens 65 kJ/m², bevorzugt mindestens 80 kJ/m², besonders bevorzugt mindestens 90 kJ/m².

Die Werte des Zug-E-Moduls sind stark vom Gesamtfasergehalt, dem Mischungsverhältnis Glas-/Carbonfaser und dem Mischungsverhältnis der beiden Polyamide PA66 und PA6T/6I abhängig.

Gerade hochverstärkte Compounds sind normalerweise sehr spröde und in der praktischen Anwendung unbrauchbar. Überraschenderweise hat sich gezeigt, dass Blendkombinationen möglich sind, welche dem Compound trotz hohen Fasergehaltes, sehr hoher Steifigkeit und hohem HDT eine außergewöhnlich gute Zähigkeit, d.h. Reissdehnung bzw. Schlagzähigkeit verleihen.

Es hat sich erfindungsgemäß gezeigt, dass insbesondere eine Mischung aus einem aliphatischen PA 66 mit einer relativen Viskosität zwischen 2,3 und 2,7 (gemessen 1% in H₂SO₄) und einem teilaromatischen CoPA 6T/6I im Verhältnis 70:30 eine besonders bevorzugte Kombination aus extrem hoher Steifigkeit, guter Zähigkeit und hohem HDT aufweist. Letztendlich wird erfindungsgemäß ein Produkt mit noch metallähnlicheren Eigenschaften als bisherige glasfaserverstärkte Materialien offenbart.

Eine noch höhere Zähigkeit und somit eine noch metallähnlichere Eigenschaft kann bei Verwendung speziell dünner Glasfasern mit einem Durchmesser unter 10 µm erreicht werden.

Bei langfaserverstärkten Formmassen ergeben sich höhere Zähigkeiten und somit noch metallähnlichere Eigenschaften, wenn anstatt der üblichen Endlosglasfaser mit einem Durchmesser von 15 bis 19 µm, solche mit einem Durchmesser von 10 bis 14 µm, insbesondere solche mit einem Durchmesser von 10 bis 12 µm verwendet werden.

Die erfindungsgemäßen Polyamidformmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 4 bis 25 mm, insbesondere von 5 bis 12 mm aufweist, kann mit den üblichen Verarbeitungsverfahren (wie z. B. Spritzgießen, Pressen) zu Formteilen weiterverarbeitet werden, wobei besonders gute Eigenschaften des Formteils mit schonenden Verarbeitungsverfahren erreicht werden. In diesem Zusammenhang bedeutet schonend vor allem, dass ein übermäßiger Faserbruch und die damit einhergehende starke Reduktion der Faserlänge weitgehend vermieden wird. Beim Spritzguss bedeutet dies, dass Schnecken mit großem Durchmesser und tiefem Kompressionsverhältnis, insbesondere kleiner 2, und großzügig dimensionierte Düsen- und Angusskanäle bevorzugt zum Einsatz kommen. Ergänzend muss dafür gesorgt werden, dass die Stäbchengranulate mit Hilfe von hohen Zylindertemperaturen rasch aufschmelzen (Kontakterwärmung) und die Fasern nicht durch übermäßige Scherbeanspruchung zu stark zerkleinert werden. Unter Berücksichtigung dieser Maßnahmen werden erfindungsgemäß Formteile erhalten, die im Mittel eine höhere Faserlänge aufweisen als vergleichbare Formteile hergestellt aus kurzfaserverstärkten Formmassen. Hierdurch wird eine zusätzliche Verbesserung der Eigenschaften, insbesondere beim Zug-E-Modul, der Reissfestigkeit und der Kerbschlagzähigkeit erreicht.

Der aus erfindungsgemäßen Formmassen hergestellte Polymerstrang kann mit allen bekannten Granulierungsverfahren zu Granulat verarbeitet werden, wie z. B. durch Stranggranulierung, bei der der Strang in einem Wasserbad abgekühlt und anschließend geschnitten wird. Ab einem Fasergehalt von mehr als 60 Gew.-% empfiehlt sich zur Verbesserung der Granulatqualität die Verwendung einer Unterwassergranulierung bzw. Heißabschlags unter Wasser, bei der die Polymerschmelze direkt durch eine Lochdüse gedrückt und von einem rotierenden Messer in einem Wasserstrom granuliert wird.

Die aus den erfindungsgemäßen Formmassen hergestellten Formkörper werden zur Herstellung von Innen- und Außenteilen, vorzugsweise mit tragender oder mechanischer Funktion im Bereich Elektro, Möbel, Sport, Maschinenbau, Sanitär und Hygiene, Medizin, Energie- und Antriebstechnik, Automobil und andere Transportmittel oder Gehäusematerial für Geräte und Apparate für die Telekommunikation, Unterhaltungselektronik, Haushaltsapparate, Maschinenbau, Heizungsbereich, oder Befestigungsteile für Installationen oder für Behälter und Lüftungsteile aller Art eingesetzt.

Als mögliche Anwendungen für die aus den erfindungsgemäßen Formmassen hergestellten Formkörpern ist vor allem der Bereich des Metalldruckgussersatz zu nennen, bei dem eine extrem hohe Steifigkeit in Kombination mit einer guten Zähigkeit erwartet wird.

### Verarbeitungsverfahren

Neben den üblichen Verarbeitungsverfahren, wie Extrusion oder Spritzguss kommen auch folgende Verarbeitungsverfahren in Frage
- CoBi-Injektion oder Montagespritzguss für Hybridteile, bei denen die erfindungsgemäße Polyamidformmasse mit anderen kompatiblen oder inkompatiblen Werkstoffen, wie z.B. Thermoplasten, Duroplasten oder Elastomeren kombiniert wird.
- Insertteile, wie z.B. Lagerstellen oder Gewindeeinsätze aus der erfindungsgemäßen Polyamidformmasse, umspritzt mit anderen kompatiblen oder inkompatiblen Werkstoffen, wie z.B. Thermoplasten, Duroplasten oder Elastomeren.
- Outsertteile, wie Rahmen, Gehäuse oder Stützen aus der erfindungsgemäßen Polyamidformmasse, in welche Funktionselemente aus anderen kompatiblen oder inkompatiblen Werkstoffen, wie z.B. Thermoplasten, Duroplasten oder Elastomeren eingespritzt werden.
- Hybridteile (Elemente aus der erfindungsgemäßen Polyamidformmasse kombiniert mit anderen kompatiblen oder inkompatiblen Werkstoffen, wie z.B. Thermoplasten, Duroplasten oder Elastomeren) hergestellt durch Verbundspritzguss, Spritzschweißen, Montagespritzguss, Ultraschall-, Reib- oder Laserschweißen, Kleben, Börteln oder Nieten.
- Halbzeuge und Profile (z.B. hergestellt durch Extrusion, Pultrusion, Schichtung oder Lamination)
- Oberflächenbeschichtung, Kaschierungen, chemisches- oder physikalisches Metallisieren, Beflockung, wobei die erfindungsgemäße Polyamidformmasse das Substrat selbst oder der Substratträger oder bei Hybrid/Bi-Injektionsteilen ein definierter Substratbereich sein kann, welcher auch durch nachträgliche chemische (z.B. Ätzen) oder physikalische Behandlung (z.B. spanabhebend oder LASER-Abtrag) zur Oberfläche gebracht werden kann.
- Bedrucken, Transferdruck, 3-D Druck, Laserbeschriften.

### Anwendungen

### Bereich Elektrogeräte

- Anschlag- und/oder Justierelemente für Elektrohandwerkzeuge mit oder ohne integrierten elektrischen Funktionen (moulded interconnect devices, MID)
- Pleuel und/oder Kolben für Bohrhammer in homogener Ausführung, also aus einem Material oder als Hybridteil, also aus einer Materialkombination
- Gehäuse, Getriebegehäuse für Winkelschleifer, Bohrmaschinen, Elektrohobel oder Schleifmaschinen mit oder ohne integrierten elektrischen Funktionen (MID) in homogener Ausführung oder als Hybridteil, wobei bestimmte Funktionsbereiche (z.B. Kraftübertragungsflächen, Gleitflächen, Dekor-Sichtbereiche, Griffbereich) aus einem anderem kompatiblen oder inkompatiblen (z.B. für gezielte Delamination bzw. Deformation, Sollbruchstelle, Kraft- bzw. Drehmomentbegrenzung) Werkstoff sein können.
- Werkzeugaufnahmen, z.B. Futter und/oder Fixierungen
- Nähmaschinengehäuse, Schiebetische mit oder ohne integrierten elektrischen Funktionen (MID)

### Bereich Sanitär- und Hygiene

- Gehäuse und/oder Funktionselemente (z.B. für Pumpen, Getriebe, Ventile) für Mundduschen, Zahnbürsten, Komforttoiletten, Duschzellen, Hygienecenter mit oder ohne integrierten elektrischen Funktionen (MID) in homogener Ausführung oder als Hybridteil

### Bereich Haushaltsgeräte

Gehäuse und/oder Funktionselemente für mechanische, elektrische oder elektro-mechanische Schließsysteme, Verriegelungssysteme oder Sensoren mit oder ohne integrierten elektrischen Funktionen (MID) für
- Kühlschränke, Kühltruhen, Gefriertruhen
- Backöfen, Herde, Dampfgarer
- Geschirrspülmaschinen

### Bereich Automobil

Gehäuse und/oder Halterungen mit oder ohne integrierten elektrischen Funktionen (MID) in homogener Ausführung oder als Hybridteil für
- Bedienungselemente/Schalter (z.B. für Außenspiegelverstellung, Sitzpositionsverstellung, Beleuchtung, Fahrtrichtungsanzeiger)
- Innensensoren, z.B. für Sitzbelegung
- Außensensoren (z.B. für Einparkhilfen, Abstandsmesser mit Ultraschall bzw. mit Radar)
- Sensoren im Motorraum (z.B. Schwingungs- bzw. Klopfsensoren)
- Innen- und Außenbeleuchtung.
- Motoren und/oder Antriebselemente im Innen und Außenbereich (z.B. für Sitzkomfortfunktionen, Außenrückspiegelverstellung, Hauptscheinwerferverstellung und/oder Nachführung, Kurvenlicht)
- Kontroll- und/oder Steuerungssysteme für den Fahrzeugantrieb (z.B. für Medienführung und/oder Regelung von z.B. Treibstoff, Luft, Kühlmittel, Schmiermittel)
   Mechanische Funktionselemente und/oder Sensorengehäuse mit oder ohne integrierten elektrischen Funktionen (MID) für
- Schließsysteme, Verriegelungen, Zuziehsysteme, z.B. bei Fahrzeugschwenktüren, Schiebetüren, Motorraumklappen bzw. -hauben, Heckklappen, Fahrzeugfenstern

### Maschinenbau

- ISO-Normteile und/oder Maschinenelemente (z.B. Schrauben, Muttern, Bolzen, Keile, Wellen, Zahnräder) in Normmassen oder anwendungsspezifischem Design oder homogener Ausführung
- ISO-Normteile und/oder Maschinenelemente, wie z.B. Schrauben, Muttern, Bolzen, Keile, Wellen in Normmassen oder anwendungsspezifischem Design oder als Hybridteil, wobei bestimmte Funktionsbereiche, wie z.B. Kraftübertragungsflächen, Gleitflächen, Dekor-Sichtbereiche aus einem anderem kompatiblen oder inkompatiblen (z.B. für gezielte Delamination, Sollbruchstelle, Kraft/Drehmomentbegrenzung) Werkstoff sein können.
- Ständer, Standfüße, Sockel für Bearbeitungsmaschinen, wie z.B. Standbohrmaschinen, Tischbohrmaschinen, Fräsmaschinen oder Kombimaschinen für Metall- und/oder Holzbearbeitung
- Insertteile, z.B. Gewindebüchsen
- Selbstfurchende Schrauben

### Bereich Energie- und Antriebstechnik:

- Rahmen, Gehäuse, Trägerteile (Substrat) und/oder Befestigungselemente für Solarzellen mit oder ohne integrierten elektrischen Funktionen (MID) in homogener Ausführung oder als Hybridteil.
- Nachführ- und/oder Justierelemente (z.B. für Lager, Scharniere, Gelenke, Zugstangen, Stossstangen) für Kollektoren.
- Pumpengehäuse und/oder Ventilgehäuse mit oder ohne integrierten elektrischen Funktionen (MID) in homogener Ausführung oder als Hybridteil.

### Bereich Medizinalequipment

- Rahmen, Gehäuse, Trägerteile mit oder ohne integrierten elektrischen Funktionen (MID) in homogener Ausführung oder als Hybridteil für Überwachungsgeräte und/oder Equipment zur Unterstützung der Lebensfunktionen.
- Einwegbestecke, wie z.B. Scheren, Klemmen, Zangen, Messergriffe in homogener Ausführung oder als Hybridteil
- Konstruktionen zur kurzzeitigen bzw. notfallmäßigen Fixierung von Frakturen in homogener Ausführung oder als Hybridteil
- Gehhilfen mit oder ohne integrierten elektrischen Funktionen (MID) und/oder Sensoren zur Belastungskontrolle in homogener Ausführung oder als Hybridteil.

### Bereich Sanitär

- Pumpengehäuse, Ventilgehäuse oder Wasserzählergehäuse mit oder ohne integrierten elektrischen Funktionen (MID) in homogener Ausführung oder als Hybridteil.

Die folgenden Beispiele sollen die Erfindung erläutern, ohne sie jedoch einzuschränken.

### Beispiele

Die in den Beispielen und Vergleichsbeispielen verwendeten Materialien sind in Tabelle 1 charakterisiert.

**Tabelle 1**

| **Material** | **Handelsname** | **relative Viskosität 20°C m-Kresol, 0,5%-ig** | **Zusammensetzung Gew.-%** | **Hersteller** |
|---|---|---|---|---|
| PA66 | Radipol A45 | 2,7 in H₂SO₄, 1%-ig | --- | Radici Chimica, Italien |
| PA6T/6l | XE 3733 NK | 1,56 | 70/30 | EMS-CHEMIE AG, Schweiz |
| GF | Vetrotex EC10-4,5MM 99B | --- | --- | Saint-Gobain Vetrotex, Frankreich |
| CF | Tenax HTA 5N51 6MM | --- | --- | Toho Tenax Europe GmbH, Deutschland |
| PA61/6T | GRIVORY G21 | 1,52 | 2/1 | EMS-CHEMIE AG, Schweiz |
| PA6 | GRILON A23 | 2,47 in H₂SO₄, 1%-ig | --- | EMS-CHEMIE AG, Schweiz |

| | | | | |
|---|---|---|---|---|
| GF Glasfaser CF Carbon- bzw. Kohlenstofffaser | | | | |

Die Formmassen der Zusammensetzungen in Tabelle 2 werden auf einem Zweiwellenextruder der Fa. Werner u. Pfleiderer Typ ZSK25 hergestellt. Die Granulate PA 66 und PA 6T/6I werden in die Einzugszone dosiert. Die Glasfaser wird wie die Kohlenstofffaser über einen Sidefeeder 3 Gehäuseeinheiten vor der Düse in die Polymerschmelze dosiert.

Die Gehäusetemperatur wurde als aufsteigendes Profil bis 310°C eingestellt. Bei 150 bis 200 upm wurden 10 kg Durchsatz verwendet. Nach Abkühlen der Stränge im Wasserbad wurden nach Granulierung und Trocknung bei 120°C für 24h die Granulateigenschaften gemessen.

Die Prüfkörper wurden auf einer Arburg Spritzgießanlage hergestellt, wobei die Zylindertemperaturen von 310°C bis 320°C und eine Scheckenumfangsgeschwindigkeit von 15 m/min eingestellt wurden. Die Formtemperatur wurde mit 110°C gewählt.

Die mechanischen Eigenschaften Zug-E-Modul, Reissfestigkeit und Reissdehnung wurden durch Zugprüfung an Norm-Prüfkörpern gemäß ISO 527 bestimmt. Die Messung der Schlagzähigkeit (SZ) wurde nach Charpy bei 23°C gemäß ISO 179/2-leU durchgeführt.

Die Bestimmung des HDT/A (1,8 MPa) und HDT/C (8 MPa) wurde nach ISO 75 vorgenommen.

**Tabelle 2**

| **Beispiele** | | **Nr.** | | | | | | | | | |
|---|---|---|---|---|---|---|---|---|---|---|---|
| **Eigenschaft** | | **1** | **2** | **3** | **4** | **5** | **6** | **7** | **8** | **9** | **10** |
| PA66 | Gew.-% | 25 | 33 | 25 | 33 | 18 | 22,7 | 18 | 24 | 16 | 20 |
| PA6T/6l | Gew.-% | 25 | 17 | 25 | 17 | 14 | 7,3 | 12 | 6 | 14 | 10 |
| Glasfaser | Gew.-% | 42 | 42 | 43,5 | 43,5 | 58 | 62 | 62 | 64 | 64 | 64 |
| Carbonfaser | Gew.-% | 8 | 8 | 6,5 | 6,5 | 10 | 8 | 8 | 6 | 6 | 6 |
| Zug-E-Modul | MPa | 20500 | 20000 | 19100 | 19400 | 28800 | 28600 | 28800 | 28300 | 28200 | 28300 |
| Reissfestigkeit | MPa | 250 | 250 | 250 | 250 | 240 | 260 | 250 | 245 | 245 | 245 |
| Reissdehnung | % | 2,5 | 2,5 | 2,5 | 2,5 | 1,8 | 1,8 | 1,8 | 1,7 | 1,8 | 1,7 |
| Schlag Charpy New 23°C | kJ/m2 | 80 | 90 | 90 | 95 | 65 | 70 | 70 | 60 | 60 | 65 |
| HDT A | °C | 245 | 255 | 245 | 245 | 245 | 245 | 245 | 245 | 245 | 245 |
| HDT C | °C | 185 | 190 | 185 | 200 | 215 | 215 | 215 | 195 | 200 | 195 |

**Tabelle 3**

| **Vergleichsbeispiele** | | **Nr.** | | | | | |
|---|---|---|---|---|---|---|---|
| **Eigenschaft** | | **11** | **12** | **13** | **14** | **15** | **16** |
| PA66 | Gew.-% | 50 | 37 | | 28 | | 23 |
| PA6T/61 | Gew.-% | | | 50 | | | |
| PA6l/6T | Gew.-% | 10 | 12 | | 10 | | 7 |
| PA 6 | Gew.-% | | | | | 35 | |
| Glasfaser | Gew.-% | 40 | 50 | 50 | 60 | 65 | 70 |
| Zug-E-Modul | MPa | 14000 | 17000 | 17600 | 20000 | 22600 | 25000 |
| Reissfestigkeit | MPa | 215 | 520 | 250 | 250 | 210 | 240 |
| Reissdehnung | % | 2,8 | 2,5 | 2,0 | 2,2 | 1,6 | 1,5 |
| Schlag Charpy New 23°C | kJ/m² | 65 | 90 | 80 | 70 | 45 | 60 |
| Kerbschlag Charpy New 23°C | kJ/m² | 11 | 12 | 10 | 14 | 12 | 10 |
| HDT A | °C | 240 | 235 | 285 | 235 | 210 | 240 |
| HDT C | °C | 150 | 165 | 210 | 175 | 180 | 190 |

Die erfindungsgemäßen Beispiele 1 bis 10 zeigen gegenüber den Vergleichsbeispielen 11 bis 16 bei entsprechendem Füllstoffgehalt ein ausgewogeneres Eigenschaftsprofil, d. h. eine ausgewogenere Kombination von hohem Zug-E-Modul und hohem HDT bei gleichzeitig guter Reissdehnung.

Die Formmasse des Vergleichsbeispiels 13 mit 50 Gew.-% Füllstoff zeigt zwar sehr hohe HDT-Werte, hat aber einen deutlich tieferen Zug-E-Modul und eine deutlich tiefere Reissdehnung als die Formmassen der erfindungsgemäßen Beispiele 1 bis 4.

Die Formmasse des Vergleichsbeispiels 16 mit 70 Gew.-% Füllstoff liegt in allen Messwerten unterhalb der Formmassen der erfindungsgemäßen Beispiele 6 bis 10.

Besonders gute mechanische Eigenschaften erhält man bei der Verwendung von speziell dünnen Glasfasern mit einem Durchmesser von unter 10 µm. Auf diese Weise lässt sich vor allem die Zähigkeit des Materials um bis zu 15% erhöhen.

**Tabelle 4**

| **Beispiele** | | | | | | |
|---|---|---|---|---|---|---|
| **Eigenschaft** | | **17** | **18** | **19** | **20** | **21** |
| PA66 | Gew.-% | 37,5 | 30 | 26,25 | 22,5 | 26,25 |
| PA6T/61 | Gew.-% | 12,5 | 10 | 8,75 | 7,5 | 8,75 |
| Glasfaser | Gew.-% | 43 | 52 | 56 | 60 | 56 |
| Carbonfaser | Gew.-% | 7 | 8 | 9 | 10 | 9 |
| Zug-E-Modul | MPa | 20400 | 25200 | 30700 | 33400 | 29500 |
| Reissfestigkeit | MPa | 310 | 320 | 290 | 260 | 320 |
| Reissdehnung | % | 1,9 | 1,7 | 1,5 | 1,5 | 1,6 |
| Schlag Charpy New 23°C | kJ/m² | 85 | 90 | 85 | 90 | 120 |
| Kerbschlag Charpy New 23°C | kJ/m² | 30 | 45 | 50 | 45 | 60 |

Die in Tabelle 4 aufgeführten Beispiele sind nach dem Pultrusionsverfahren hergestellt.

Die Pultrusionsbedingungen sind in nachfolgender Tabelle aufgeführt.

| Temperatureinstellung Extruder und Imprägnierkammer | °C | 280 - 370 |
|---|---|---|
| Durchsatz Granulat | kg/h | 100 - 180 |
| Abzugsgeschwindigkeit | m/min | 5 - 11 |
| Faservorwärmung | °C | keine |
| Granulatlänge | mm | 11 |

Die aus dem langfaserverstärktem Stäbchengranulat (Granulatlänge: 11 mm) hergestellten Prüfkörper zeigen bei entsprechendem Fasergehalt noch weitere Verbesserungen betreffend dem Zug-E-Modul, der Reissfestigkeit, der Kerbschlagzähigkeit gegenüber den Vergleichsvarianten. Bei der Schlagzähigkeit werden die gleichen oder höhere Werte erreicht.

Die Messung der Kerbschlagzähigkeit wurde nach Charpy bei 23°C gemäß ISO 179/2-1eA durchgeführt.

Die beim Pultrusionsverfahren als Roving eingesetzten Glasfasern weisen einen Durchmesser von 10 bis 20 µm, bevorzugt 12 bis 18 µm auf, wobei der Querschnitt der Glasfasern rund, oval oder eckig ist. Insbesondere werden erfindungsgemäß E-Glasfasern verwendet. Es können aber auch alle anderen Glasfasersorten, wie z. B. A-, C-, D-, M-, S-, R-Glasfasern oder beliebige Mischungen davon oder Mischungen mit E-Glasfasern eingesetzt werden. Die beim Pultrusionsverfahren eingesetzten Endlos-Kohlefasern weisen einen Durchmesser von 5 bis 10 µm, bevorzugt 6 bis 8 µm auf.

Zur Beschleunigung der Faserimprägnierung können die Fasern auf Temperaturen bis 400°C mit Hilfe einer geeigneten IR-, Kontakt-, Strahlungs- oder Heißgasvorwärmung vorgeheizt werden. Vorrichtungen mit Spreizoberflächen innerhalb der Imprägnierkammer sorgen für eine vollständige Imprägnierung der Fasern mit der Polymerschmelze. Aus der Imprägniereinheit austretende Stränge können durch kontrollierte Walzensysteme geformt werden, so dass Granulat mit kreisförmigem, elliptischem oder rechteckigem Querschnitt erhalten wird.

Zur Verbesserung der Matrixanbindung und des Faserhandlings können die Fasern mit chemisch unterschiedlichen Schichten, wie sie für Glas- und Kohlefasern im Stand der Technik bekannt sind, beschichtet sein.

Für die Beispiele 17 bis 20 wurde die Glasfaser PPG 4588 mit 17 µm Durchmesser der Firma PPG Industries Fiber Glass verwendet.

Für das Beispiel 21 wurde die Glasfaser Vetrotex Roving RO99 mit 12 µm Durchmesser der Firma Saint Gobain Vetrotex verwendet.

Als Kohlefaser wurde bei den Beispielen 17 bis 21 Tenax HTA 5131 mit 7 µm Durchmesser der Firma Toho Tenax Europe GmbH in Form eines Roving eingesetzt.

## Patentansprüche

1. Verfahren zur Herstellung von hochsteifen und gleichzeitig zähen, verstärkten Polyamidformmassen durch Pultrusionsverfahren, wobei die Polyamidformmassen Wärmeformbeständigkeitswerte HDT/A (1,8 MPa) (gemessen nach ISO 75) von über 242°C, insbesondere von mindestens 245 °C, HDT/C (8 MPa) von über 150°C, insbesondere von über 170°C, sowie eine Polyamidmatrix aufweisen, wobei die Polyamidformmassen ein Blend aus den folgenden Komponenten enthalten:
(A) Polyamid 66,
(B) Copolyamid, aufgebaut aus
(b₁) 50 bis 80 Gew.-Teile Einheiten, insbesondere 50 bis 70 Gew.-Teile Einheiten, welche sich von Terephthalsäure (T) in Kombination mit Hexamethylendiamin (6) in nahezu äquimolarem Verhältnis ableiten,
(b₂) 50 bis 20 Gew.-Teile Einheiten, insbesondere 50 bis 30 Gew.-Teile Einheiten, welche sich von Isophthalsäure (I) in Kombination mit Hexamethylendiamin in nahezu äquimolarem Verhältnis ableiten,
wobei die Gewichtsteile der Komponenten (b₁) und (b₂) zusammen 100 Gew.-Teile ergeben,
und eine Füllstoffkomponente, enthaltend eine Mischung aus:
(C) Glasfasern und
(D) Carbon- bzw. Kohlenstofffasern,
wobei die Gewichtsprozente der Komponenten (A) bis (D) zusammen 100% ergeben und
wobei die Komponenten (A), (B), (C) und (D) die folgenden Bedingungen erfüllen:
| | |
|---|---|
| (A) + (B): | 20 bis 60 Gew.-%, |
| Gewichtsverhältnis (A)/(B): | 50/50 bis 95/5, |
| (C) + (D): | 40 bis 80 Gew.%, |
| Gewichtsverhältnis (C)/(D): | 80/20 bis 95/5, |
wobei die Polyamidformmassen gegebenenfalls zusätzlich zu den Komponenten (A) bis (D) Zusatzstoffe (E) enthalten, und wobei deren Menge additiv zur Summe der Komponenten (A) bis (D) ist,
und wobei das Pultrusionsverfahren umfasst:
Aufschmelzen des polymeren Anteils und vollständiges Durchtränken eines endlosen Faserstrangs mit der Polymerschmelze, danach Abkühlen und Schneiden, sodass langfaserverstärktes Stäbchengranulat erhalten wird.

2. Verfahren gemäß Anspruch 1, **dadurch gekennzeichnet, dass** die Polyamidformmassen als Polyamidmatrix ein Blend aus den folgenden Komponenten enthalten:
(A) Polyamid 66,
(B) Copolyamid, aufgebaut aus
(b₁) 50 bis 80 Gew.-Teile Einheiten, insbesondere 50 bis 70 Gew.-Teile Einheiten, welche sich von Terephthalsäure (T) in Kombination mit Hexamethylendiamin (6) in nahezu äquimolarem Verhältnis ableiten,
(b₂) 50 bis 20 Gew.-Teile Einheiten, insbesondere 50 bis 30 Gew.-Teile Einheiten, welche sich von Isophthalsäure (I) in Kombination mit Hexamethylendiamin in nahezu äquimolarem Verhältnis ableiten,
wobei die Gewichtsteile der Komponenten (b₁) und (b₂) zusammen 100 Gew.-Teile ergeben,
und als Füllstoffkomponente enthaltend eine Mischung aus:
(C) Glasfasern und
(D) Carbon- bzw. Kohlenstofffasern,
wobei die Gewichtsprozente der Komponenten (A) bis (D) zusammen 100% ergeben und
wobei die Komponenten (A), (B), (C) und (D) die folgenden Bedingungen erfüllen:
| | |
|---|---|
| (A) + (B): | 20 bis 39 Gew.-%, |
| Gewichtsverhältnis (A)/(B): | 50/50 bis 95/5, |
| (C) + (D): | 61 bis 80 Gew.-%, bevorzugt 61 bis 75 Gew.-%, besonders bevorzugt 64 bis 75 Gew.-%, ganz besonders bevorzugt 66 bis 75 Gew.-%, |
Gewichtsverhältnis (C)/(D): 80/20 bis 95/5,
wobei die Polyamidformmassen gegebenenfalls zusätzlich zu den Komponenten (A) bis (D) Zusatzstoffe (E) enthalten, und wobei deren Menge additiv zur Summe der Komponenten (A) bis (D) ist.

3. Verfahren gemäß Anspruch 1 oder 2, **dadurch gekennzeichnet, dass** die Polyamidformmassen Reissfestigkeiten von über 230 MPa (gemessen an Norm-Prüfkörpern gemäß ISO 527) und gegebenenfalls Reissdehnungen von über 1,4% (gemessen an Norm-Prüflcörpern gemäß ISO 527) aufweisen.

4. Verfahren gemäß einem oder mehreren der Ansprüche 1 oder 2, **dadurch gekennzeichnet, dass** die Polyamidformmassen Reissfestigkeiten von über 230 MPa (gemessen an Norm-Prüfkörpern gemäß ISO 527) und gegebenenfalls Kerbschlagzähigkeiten von mindestens 25 kJ/m² (gemessen nach Charpy bei 23 °C gemäss ISO 179/2-1eA) aufweisen.

5. Verfahren gemäß einem oder mehreren der Ansprüche 1 oder 2, **dadurch gekennzeichnet, dass** die Polyamidformmassen Reissfestigkeiten von mindestens 250 MPa (gemessen an Norm-Prüfkörpern gemäß ISO 527) und gegebenenfalls Kerbschlagzähigkeiten von mindestens 25 kJ/m² (gemessen nach Charpy bei 23 °C gemäss ISO 179/2-1eA) aufweisen.

6. Verfahren gemäß einem oder mehreren der Ansprüche 1, 2, 4 oder 5, **dadurch gekennzeichnet, dass** die Polyamidformmassen einen Gesamtfasergehalt von 66 bis 74 Gew.-%, einen Zug-E-Modul von über 25500 MPa, bevorzugt von über 27000 MPa, besonders bevorzugt von über 28000 MPa und gegebenenfalls eine Kerbschlagzähigkeit von mindestens 30 kJ/m² aufweisen.

7. Verfahren gemäß einem oder mehreren der Ansprüche 1, 2, 4 bis 6, **dadurch gekennzeichnet, dass** die Polyamidformmassen einen Gesamtfasergehalt von 66 bis 74 Gew.-% und eine Kerbschlagzähigkeit von mindestens 40 kJ/m², bevorzugt mindestens 45 kJ/m² aufweisen.

8. Verfahren gemäß einem oder mehreren der Ansprüche 1, 2, 4 oder 5, **dadurch gekennzeichnet, dass** die Polyamidformmassen einen Gesamtfasergehalt von 46 bis 54 Gew.-%, einen Zug-E-Modul von über 18000 MPa, bevorzugt von über 19000 MPa, besonders bevorzugt von über 20000 MPa und gegebenenfalls eine Kerbschlagzähigkeit von mindestens 25 kJ/m² aufweisen.

9. Verfahren gemäß einem oder mehreren der Ansprüche 1, 2, 4 oder 5, **dadurch gekennzeichnet, dass** die Polyamidformmassen einen Gesamtfasergehalt von 46 bis 54 Gew.-% und eine Kerbschlagzähigkeit von mindestens 30 kJ/m², bevorzugt mindestens 35 kJ/m² aufweisen.

10. Verfahren gemäß einem oder mehreren der Ansprüche 1, 2, 4 oder 5, **dadurch gekennzeichnet, dass** die Polyamidformmassen einen Gesamtfasergehalt von 55 bis 65 Gew.-%, einen Zug-E-Modul von über 20000MPa, bevorzugt von über 25000 MPa, besonders bevorzugt von über 30000 MPa und gegebenenfalls eine Kerbschlagzähigkeit von mindestens 35 kJ/m², bevorzugt mindestens 40 kJ/m² aufweisen.

11. Verfahren gemäß einem oder mehreren der Ansprüche 1 bis 10, in denen das Copolyamid 6T/6I (Komponente (B)) eine relative Viskosität (RV), gemessen in 0,5%iger m-Kresol-Lösung, von zwischen 1,4 und 1,8, bevorzugt von zwischen 1,48 und 1,7, aufweist.

12. Verfahren gemäß einem oder mehreren der Ansprüche 1 bis 11, in denen die als Roving eingesetzten Glasfasern (Komponente (C)) einen Durchmesser von 10 bis 20 µm, bevorzugt von 12 bis 18 µm aufweisen, wobei insbesondere der Querschnitt der Glasfasern rund, oval oder rechteckig ist, wobei E-Glasfasem bevorzugt sind.

13. Verfahren gemäß einem oder mehreren der Ansprüche 1 bis 12, **dadurch gekennzeichnet, dass** als Zusatzstoff (E) solche aus der Gruppe der anorganischen Stabilisatoren, organischen Stabilisatoren, Gleitmittel, Farbstoffe, metallischen Pigmente, Metallflitter, metallbeschichtete Partikel, halogenhaltigen Flammschutzmittel, halogenfreien Flammschutzmittel, Schlagzähmodifikatoren, Antistatika, Leitfähigkeitsadditive, Entformungsmittel, optischen Aufheller, natürlichen Schichtsilikate, synthetischen Schichtsilikate oder Gemische der genannten Zusatzstoffe in den Formmassen enthalten sind.

14. Verfahren gemäß einem oder mehreren der Ansprüche 1 bis 13, **dadurch gekennzeichnet, dass** als Zusatzstoff (E) Ruß und/oder Kohlenstoffnanoröhrchen in Mengen von bis zu 10 Gew.-% in den Formmassen enthalten ist.

15. Langfaserverstärktes Stäbchengranulat, erhältlich durch Pultrusionsverfahren gemäß einem oder mehreren der Ansprüche 1 bis 14, welches bevorzugt eine Granulatlänge von 4 bis 25 mm, besonders bevorzugt von 5 bis 12 mm aufweist.

16. Verwendung des langfaserverstärkten Stäbchengranulats gemäß Anspruch 15 mit Kerbschlagzähigkeiten von mindestens 25 kJ/m² (gemessen nach Charpy bei 23 °C gemäss ISO 179/2-1eA), Reißdehnungen von über 1,4% (gemessen an Norm-Prüfkörpern gemäß ISO 527), Wärmeformbeständigkeitswerten HDT/A (1,8 MPa) (gemessen nach ISO 75) von über 242°C, bevorzugt von mindestens 245 °C, HDT/C (8 MPa) (gemessen nach ISO 75) von über 165°C, bevorzugt von über 190 °C, zur Herstellung von Formkörpern und/oder Hohlkörpern.

17. Verfahren zur Herstellung von Formkörpern und/oder Hohlkörpern aus langfaserverstärktem Stäbchengranulat gemäß Anspruch 15 durch Extrusion, Spritzguss, oder Pressen.

18. Formkörper, erhältlich aus dem langfaserverstärktem Stäbchengranulat gemäß Anspruch 15.

## Claims

1. Method for producing high rigid and simultaneously tough, reinforced polyamide molding materials by a pultrusion method, wherein the molding materials have heat distortion temperature values HDT/A (1.8 MPa) (measured according to ISO 75) of more than 242°C, in particular of at least 245°C, HDT/C (8 MPa) of more than 150°C, in particular of more than 170°C, and with a polyamide matrix, wherein the polyamide molding materials comprise a blend of the following components:
(A) polyamide 66,
(B) copolyamide, synthesized of
(b₁) 50 to 80 parts by weight of units, in particular 50 to 70 parts by weight of units, which are derived from terephthalic acid (T) in combination with hexamethylenediamine (6) in almost equimolar ratio,
(b₂) 50 to 20 parts by weight of units, in particular 50 to 30 parts by weight of units, which are derived from adipic acid (I) in combination with hexamethylenediamine in almost equimolar ratio,
wherein the parts by weight of the components (b₁) and (b₂) total 100 parts by weight,
and a filler component comprising a mixture of:
(C) glass fibers and
(D) carbon fibers,
wherein the percentages by weight of the components (A) to (D) total to 100% and the components (A), (B), (C), and (D) fulfilling the following conditions:
| | |
|---|---|
| (A) + (B): | 20 to 60% by weight, |
| weight ratio (A)/(B): | 50/50 to 95/5, |
| (C) + (D): | 40 to 80% by weight, |
| weight ratio (C)/(D): | 80/20 to 95/5, |
wherein the polyamide molding materials optionally containing additives (E) in addition to the components (A) to (D), and the amount thereof being additive to the sum of the components (A) to (D),
and wherein the pultrusion method comprises:
melting of the polymeric part and complete soaking of an endless fiber strand with the polymer melt, thereafter cooling and cutting, so that long-fiber reinforces rod-like granules are obtained.

2. Method according to claim 1, **characterized in that** the polymer molding materials comprise a blend of the following components as polyamide matrix:
(A) polyamide 66,
(B) copolyamide, synthesized of
(b₁) 50 to 80 parts by weight of units, in particular 50 to 70 parts by weight of units, which are derived from terephthalic acid (T) in combination with hexamethylenediamine (6) in almost equimolar ratio,
(b₂) 50 to 20 parts by weight of units, in particular 50 to 30 parts by weight of units, which are derived from adipic acid (I) in combination with hexamethylenediamine in almost equimolar ratio,
wherein the parts by weight of the components (b₁) and (b₂) total 100 parts by weight,
and a filler component containing a mixture of:
(C) glass fibers and
(D) carbon fibers,
wherein the percentages by weight of the components (A) to (D) total to 100% and the components (A), (B), (C), and (D) fulfilling the following conditions:
| | |
|---|---|
| (A) + (B): | 20 to 39% by weight, |
| weight ratio (A)/(B): | 50/50 to 95/5, |
| (C) + (D): | 61 to 80% by weight, preferably 61 to 75% by weight, more preferably 64 to 75% by weight, most preferably 66 to 75% by weight, |
| weight ratio (C)/(D): | 80/20 to 95/5, |
wherein the polyamide molding materials optionally containing additives (E) in addition to the components (A) to (D), and the amount thereof being additive to the sum of the components (A) to (D).

3. Method according to claim 1 or 2, **characterized in that** the polyamide molding materials have ultimate tensile strengths of more than 230 MPa (measured on standard test specimens according to ISO 527) and optionally elongations at break of more than 1.4% (measured on standard test specimens according to ISO 527).

4. Method according to one or more of claims 1 or 2, **characterized in that** the polyamide molding materials have ultimate tensile strengths of more than 230 MPa (measured on standard test specimens according to ISO 527) and optionally notch impact strengths of more than 25 kJ/m² (measured according to Charpy at 23°C according to ISO 179/2-1eA).

5. Method according to one or more of claims 1 or 2, **characterized in that** the polyamide molding materials have ultimate tensile strengths of more than 250 MPa (measured on standard test specimens according to ISO 527) and optionally notch impact strengths of more than 25 kJ/m²(measured according to Charpy at 23°C according to ISO 179/2-1eA).

6. Method according to one or more of claims 1, 2, 4 or 5, **characterized in that** the polyamide molding materials have a total fiber content of 66 to 74% by weight, a tensile modulus of elasticity of more than 25500 MPa, preferably of more than 27000 MPa, more preferably of more than 28000 MPa, and optionally a notch impact strength of at least 30 kJ/m².

7. Method according to one or more of claims 1, 2, 4 to 6, **characterized in that** the polyamide molding materials have a total fiber content of 66 to 74% by weight and a notch impact strength of at least 40 kJ/m², preferably at least 45 kJ/m².

8. Method according to one or more of claims 1, 2, 4 or 5, **characterized in that** the polyamide molding materials have a total fiber content of 46 to 54% by weight, a tensile modulus of elasticity of more than 18000 MPa, preferably of more than 19000 MPa, more preferably of more than 20000 MPa, and optionally a notch impact strength of at least 25 kJ/m².

9. Method according to one or more of claims 1, 2, 4 or 5, **characterized in that** the polyamide molding materials have a total fiber content of 46 to 54% by weight and a notch impact strength of at least 30 kJ/m², preferably at least 35 kJ/m².

10. Method according to one or more of claims 1, 2, 4 or 5, **characterized in that** the polyamide molding materials have a total fiber content of 55 to 65% by weight, a tensile modulus of elasticity of more than 20000 MPa, preferably of more than 25000 MPa, more preferably of more than 30000 MPa, and optionally a notch impact strength of at least 35 kJ/m², preferably of at least 40 kJ/m².

11. Method according to one or more of claims 1 to 10, **characterized in that** the copolyamide 6T/66 (component (B)) has a relative viscosity (RV), measured in 0.5% m-cresol solution, of between 1.4 and 1.8, preferably of between 1.48 and 1.7.

12. Method according to one or more of claims 1 to 11, **characterized in that** the glass fibers (component (C)) have a diameter of 10 to 20 µm, preferably of 12 to 18 µm, wherein the cross-section of the glass fibers being especially circular, oval or rectangular, wherein E glass fibers are preferred.

13. Method according to one or more of claims 1 to 12, **characterized in that** the additives (E) from the group consisting of inorganic stabilizers, organic stabilizers, lubricants, dyes, metallic pigments, metal spangles, metal-coated particles, halogen-containing flame retardants, halogen-free flame retardants, impact modifiers, antistatic agents, conductivity additives, demolding agents, optical brighteners, natural sheet silicates, synthetic sheet silicates or mixtures of said additives are present in the molding materials.

14. Method according to one or more of claims 1 to 13, **characterized in that** carbon black and/or carbon nanotubes are present as additive (E) in amounts of up to 10% by weight in the molding materials.

15. Long fiber-reinforced rod-shaped granules obtainable by pultrusion method according to one or more of claims 1 to 14, which preferably have a granulate length of 4 to 25 mm, more preferably of 5 to 12 mm.

16. Use of the long fiber-reinforced rod-shaped granules according to claims 15 having notch impact strengths of more than 25 kJ/m² (measured according to Charpy at 23°C according to ISO 179/2-1eA), elongations at break of more than 1.4% (measured on standard test specimens according to ISO 527), heat distortion temperature values HDT/A (1.8 MPa) (measured according to ISO 75) of more than 242°C, preferably of at least 245°C, HDT/C (8 MPa) (measured according to ISO 75) of more than 165°C, preferably of more than 190°C, for the production of molded parts and/or hollow parts.

17. Method for producing molded parts and/or hollow parts from the long fiber-reinforced rod-shaped granules according to claims 15 by extrusion, injection molding or pressing.

18. Molded parts obtainable from the long fiber-reinforced rod-shaped granules according to claim 15.

## Revendications

1. Procédé de préparation de compositions de moulage renforcées à base de polyamide et présentant une grande rigidité et en même temps une ténacité par un procédé de pultrusion, dans lequel les compositions de moulage à base de polyamide présentent une valeur de stabilité dimensionnelle à la chaleur HDT/A (1,8 MPa) (mesurée suivant ISO 75) supérieure à 242°C, de préférence au moins égale à 245°C, et une valeur de stabilité dimensionnelle à la chaleur HDT/C (8 MPa) supérieure à 150°C, en particulier supérieure à 170°C, ainsi qu'une matrice en polyamide, dans lequel les compositions de moulage à base de polyamide contiennent un mélange des composants suivants :
(A) polyamide 66,
(B) copolyamide constitué de
(b₁) 50 à 80 parties en poids, en particulier 50 à 70 parties en poids de motifs dérivés de l'acide téréphtalique (T) en combinaison avec de l'hexaméthylène diamine (6) selon un ratio pratiquement équimolaire,
(b₂) 50 à 20 parties en poids, en particulier 50 à 30 parties en poids de motifs dérivés de l'acide isophtalique (I) en combinaison avec de l'hexaméthylène diamine selon un ratio pratiquement équimolaire,
la somme des parties en poids des composants (b₁) et (b₂) étant égale à 100 parties en poids,
et un composant de charge contenant un mélange de :
(C) fibres de verre, et
(D) fibres de carbone,
la somme des pourcentages en poids des composants (A) à (D) étant égale à 100% et les composants (A), (B), (C) et (D) satisfaisant les conditions suivantes :
| | |
|---|---|
| (A) + (B) : | 20 à 60% en poids, |
| ratio en poids (A)/(B) : | 50/50 à 95/5, |
| (C) + (D) : | 40 à 80% en poids, |
| ratio en poids (C)/(D) : | 80/20 à 95/5, |
dans lequel les compositions de moulage à base de polyamide contiennent le cas échéant, en plus des composants (A) à (D), des additifs (E) dont la quantité s'ajoute à la somme des composants (A) à (D),
et dans lequel le procédé de pultrusion comprend la fusion des constituants polymères et l'imprégnation complète d'un écheveau de fibres avec la fusion polymère, suivies d'un refroidissement et d'une découpe pour obtenir un granulé sous forme de bâtonnets renforcés par des fibres longues.

2. Procédé selon la revendication 1, **caractérisé en ce que** les compositions de moulage à base de polyamide contiennent en tant que matrice en polyamide un mélange des composants suivants :
(A) polyamide 66,
(B) copolyamide constitué de
(b₁) 50 à 80 parties en poids, en particulier 50 à 70 parties en poids de motifs dérivés de l'acide téréphtalique (T) en combinaison avec de l'hexaméthylène diamine (6) selon un ratio pratiquement équimolaire,
(b₂) 50 à 20 parties en poids, en particulier 50 à 30 parties en poids de motifs dérivés de l'acide isophtalique (1) en combinaison avec de l'hexaméthylène diamine selon un ratio pratiquement équimolaire,
la somme des parties en poids des composants (b₁) et (b₂) étant égale à 100 parties en poids,
et, en tant que composant de charge, un mélange constitué de :
(C) fibres de verre, et
(D) fibres de carbone,
la somme des pourcentages en poids des composants (A) à (D) étant égale à 100% et les composants (A), (B), (C) et (D) satisfaisant les conditions suivantes :
| | |
|---|---|
| (A) + (B) : | 20 à 39% en poids, |
| ratio en poids (A)/(B) : | 50/50 à 95/5, |
| (C) + (D) : | 61 à 80% en poids, de préférence 61 à 75% en poids, de façon particulièrement préférée 64 à 75% en poids, de façon tout particulièrement préférée 66 à 75% en poids, |
| ratio en poids (C)/(D) : | 80/20 à 95/5, |
dans lequel les compositions de moulage à base de polyamide contiennent le cas échéant, en plus des composants (A) à (D), des additifs (E) dont la quantité s'ajoute à la somme des composants (A) à (D).

3. Procédé selon la revendication 1 ou la revendication 2, **caractérisé en ce que** les compositions de moulage à base de polyamide présentent des valeurs de résistance à la rupture supérieures à 230 MPa (mesurées sur des éprouvettes normalisées suivant ISO 527) et le cas échéant des valeurs d'élongation à la rupture supérieures à 1,4% (mesurées sur des éprouvettes normalisées suivant ISO 527).

4. Procédé selon une ou plusieurs des revendications 1 ou 2, **caractérisé en ce que** les compositions de moulage à base de polyamide présentent des valeurs de résistance à la rupture supérieures à 230 MPa (mesurées sur des éprouvettes normalisées suivant ISO 527) et le cas échéant des valeurs de résistance au choc sur barreau entaillé au moins égales à 25 kJ/m² (mesurées par la méthode de Charpy à 23°C suivant ISO 179/ 2-1 eA).

5. Procédé selon une ou plusieurs des revendications 1 ou 2, **caractérisé en ce que** les compositions de moulage à base de polyamide présentent des valeurs de résistance à la rupture au moins égales à 250 MPa (mesurées sur des éprouvettes normalisées suivant ISO 527) et le cas échéant des valeurs de résistance au choc sur barreau entaillé au moins égales à 25 kJ/m² (mesurées par la méthode de Charpy à 23°C suivant ISO 179/ 2-1 eA).

6. Procédé selon une ou plusieurs des revendications 1, 2, 4 ou 5, **caractérisé en ce que** les compositions de moulage à base de polyamide présentent une teneur totale en fibres allant de 66 à 74% en poids, un module d'élasticité à la traction supérieur à 25 500 MPa, de préférence supérieur à 27 000 MPa, de façon particulièrement préférée supérieur à 28 000 MPa, et le cas échéant une résistance au choc sur barreau entaillé au moins égale à 30 kJ/m².

7. Procédé selon une ou plusieurs des revendications 1, 2, 4 à 6, **caractérisé en ce que** les compositions de moulage à base de polyamide présentent une teneur totale en fibres allant de 66 à 74% en poids et une résistance au choc sur barreau entaillé au moins égale à 40 kJ/m², de préférence au moins égale à 45 kJ/m².

8. Procédé selon une ou plusieurs des revendications 1, 2, 4 ou 5, **caractérisé en ce que** les compositions de moulage à base de polyamide présentent une teneur totale en fibres allant de 46 à 74% en poids, un module d'élasticité à la traction supérieur à 18 000 MPa, de préférence supérieur à 19 000 MPa, de façon particulièrement préférée supérieur à 20 000 MPa, et le cas échéant une résistance au choc sur barreau entaillé au moins égale à 25 kJ/m².

9. Procédé selon une ou plusieurs des revendications 1, 2, 4 ou 5, **caractérisé en ce que** les compositions de moulage à base de polyamide présentent une teneur totale en fibres allant de 46 à 54% en poids et une résistance au choc sur barreau entaillé au moins égale à 30 kJ/m², de préférence au moins égale à 35 kJ/m².

10. Procédé selon une ou plusieurs des revendications 1, 2, 4 ou 5, **caractérisé en ce que** les compositions de moulage à base de polyamide présentent une teneur totale en fibres allant de 55 à 65% en poids, un module d'élasticité à la traction supérieur à 20 000 MPa, de préférence supérieur à 25 000 MPa, de façon particulièrement préférée supérieur à 30 000 MPa, et le cas échéant une résistance au choc sur barreau entaillé au moins égale à 35 kJ/m², de préférence au moins égale à 40 kJ/m².

11. Procédé selon une ou plusieurs des revendications 1 à 10, dans lequel le copolyamide 6T/6I (composant (B)) présente une viscosité relative (V_{R}), mesurée dans une solution de *m*-crésol à 0,5%, dans la plage de 1,4 à 1,8, de préférence de 1,48 à 1,7.

12. Procédé selon une ou plusieurs des revendications 1 à 11, dans lequel les fibres de verre utilisées comme stratifil de verre textile (composant (C)) présentent un diamètre de 10 à 20 µm, de préférence de 12 à 18 µm, les fibres de verre ayant en particulier une section de forme ronde, ovale ou rectangulaire, les fibres de verre E étant préférées.

13. Procédé selon une ou plusieurs des revendications 1 à 12, **caractérisé en ce que** l'additif (E) contenu dans les compositions est choisi dans le groupe comprenant des stabilisateurs inorganiques, des stabilisateurs organiques, des lubrifiants, des colorants, des pigments métalliques, des paillettes métalliques, des particules revêtues de métal, des agents ignifugeants halogénés, des agents ignifugeants dépourvus d'halogènes, des modificateurs de résilience, des agents antistatiques, des additifs de conductibilité, des agents de démoulage, des azurants optiques, des silicates lamellaires naturels, des silicates lamellaires synthétiques, ou des mélanges des additifs précités.

14. Procédé selon une ou plusieurs des revendications 1 à 13, **caractérisé en ce que** l'additif (E) contenu dans les compositions est du noir de fumée et/ou des nanotubes de carbone en des quantités allant jusqu'à 10% en poids.

15. Granulé sous forme de bâtonnets renforcés par des fibres longues, qui peut être obtenu par un procédé de pultrusion selon une ou plusieurs des revendications 1 à 14 et qui présente de préférence une longueur de granulé allant de 4 à 25 mm, de façon particulièrement préférée de 5 à 12 mm.

16. Utilisation du granulé sous forme de bâtonnets renforcés par des fibres longues selon la revendication 15, ayant des valeurs de résistance au choc sur barreau entaillé au moins égales à 25 kJ/m² (mesurées par la méthode de Charpy à 23°C suivant ISO 179/2-1eA), des valeurs d'élongation à la rupture supérieures à 1,4% (mesurées sur des éprouvettes normalisées suivant ISO 527), des valeurs de stabilité dimensionnelle à la chaleur HDT/A (1,8 MPa) (mesurées suivant ISO 75) supérieures à 242°C, de préférence au moins égales 245°C, des valeurs de stabilité dimensionnelle à la chaleur HDT/C (8 MPa) (mesurées suivant ISO 75) supérieures à 165°C, de préférence supérieures à 190°C, pour produire des pièces moulées et/ou des pièces creuses.

17. Procédé de fabrication de pièces moulées et/ou de pièces creuses à partir de granulé sous forme de bâtonnets renforcés par des fibres longues selon la revendication 15 par extrusion, moulage par injection ou compression.

18. Pièces moulées pouvant être obtenues à partir du granulé sous forme de bâtonnets renforcés par des fibres longues selon la revendication 15.
